(19) Europäisches Patentamt
European Patent Office
Office européen des brevets

(11) **EP 2 540 137 B1**

(12) **FASCICULE DE BREVET EUROPEEN**

(45) Date de publication et mention
de la délivrance du brevet:
**14.06.2017 Bulletin 2017/24**

(21) Numéro de dépôt: **11711605.3**

(22) Date de dépôt: **23.02.2011**

(51) Int Cl.:
*H05B 6/02* $^{(2006.01)}$      *B29C 33/06* $^{(2006.01)}$
*B29C 35/08* $^{(2006.01)}$

(86) Numéro de dépôt international:
**PCT/FR2011/000109**

(87) Numéro de publication internationale:
**WO 2011/104447 (01.09.2011 Gazette 2011/35)**

(54) **MOULE, PROCEDE DE FABRICATION D'UN MOULE ET PROCEDE DE FABRICATION D'UN PRODUIT EN MATIERE PLASTIQUE OU COMPOSITE AU MOYEN DE CE MOULE**

GUSSFORM, VERFAHREN ZUR HERSTELLUNG EINER GUSSFORM UND VERFAHREN ZUR HERSTELLUNG EINES KUNSTSTOFF- ODER VERBUNDSTOFFPRODUKTES MIT DIESER GUSSFORM

MOLD, METHOD FOR MANUFACTURING A MOLD AND METHOD FOR MANUFACTURING A PLASTIC OR COMPOSITE MATERIAL PRODUCT BY MEANS OF SAID MOLD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2010 PCT/FR2010/000166**

(43) Date de publication de la demande:
**02.01.2013 Bulletin 2013/01**

(73) Titulaire: **Aperam**
**1882 Luxembourg (LU)**

(72) Inventeur: **WAECKERLE, Thierry**
**F-58000 Nevers (FR)**

(74) Mandataire: **Lavoix**
**2, place d'Estienne d'Orves**
**75441 Paris Cedex 09 (FR)**

(56) Documents cités:
FR-A1- 2 488 185     FR-A1- 2 867 939
FR-A1- 2 928 808     US-A- 5 641 422

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention est relative à un moule plus particulièrement destiné à la fabrication de produits en matière plastique ou composite, sans pour autant y être limitée.

On sait qu'il est très favorable d'utiliser un procédé de moulage mettant en oeuvre le chauffage par induction électromagnétique, notamment pour chauffer rapidement et efficacement des matériaux plastiques ou composites devant être façonnés, mais aussi pour chauffer des pièces en métaux ou alliages métalliques avant de les emboutir et de les tremper dans l'outil.

Selon un tel procédé de chauffage par induction, le dispositif de moulage comprend des inducteurs traversés par un courant à moyenne fréquence $I_{gen}$ délivré par un générateur de puissance, et générant un champ électromagnétique variable dans le temps. Ce champ variable est la base du phénomène bien connu d'induction électromagnétique : étant appliqué à un matériau conducteur de courant, il crée un flux magnétique variable dans le temps et une tension induite dans le matériau conducteur, qui crée à son tour des courants induits en surface du métal conducteur, sur une profondeur appelée épaisseur de peau $\delta$ et donnée par la relation :

$$\delta = \sqrt{\frac{2}{\mu \cdot \sigma \cdot \omega}}$$

dans laquelle $\mu$ est la perméabilité magnétique du matériau avec $\mu = \mu_0 \cdot \mu_r$, $\sigma$ est la conductivité électrique du matériau (inverse de la résistivité électrique Rel), $\omega$ est la pulsation et est égale à $2 . \pi . f$ où f est la fréquence du courant d'excitation et du champ magnétique généré.

Lorsque le matériau conducteur n'est pas ferromagnétique, la valeur de $\mu_r$ est proche de 1 et l'épaisseur de peau est donnée par la relation :

$$\delta_{amagn} = 500 \sqrt{\frac{Rel}{f}}$$

A cet effet, on connaît le procédé de chauffage par induction de matériau de FR 2 867 939 qui décrit un moule permettant de recevoir dans une cavité le matériau-précurseur qui prendra ses propriétés définitives après traitement thermique. L'alimentation de l'inducteur par un courant électrique à moyenne fréquence crée des courants induits dans l'épaisseur de peau d'une pièce intermédiaire en contact avec le matériau à chauffer, ce qui limite le volume des pièces du moule devant être chauffées.

Par ailleurs, à l'intérieur de cet élément intermédiaire peuvent être positionnés des blocs d'inserts fabriqués à partir de matériaux présentant des résistivités électriques ou des perméabilités magnétiques distinctes afin d'obtenir différentes températures de surface.

Cependant, les présents inventeurs ont observé que le dimensionnement et la mise en place des blocs d'inserts dans le moule est une opération délicate ne permettant pas un ajustement très fin des températures de surface.

En outre, même lorsque cette mise en place est réalisée de façon très fine, ce qui prend un temps considérable, on observe que certaines zones de surface sont l'objet d'un phénomène de surchauffe ou de sous-chauffe, qui nuisent à la bonne fabrication du produit moulé en créant des hétérogénéités de dureté, par exemple.

Quelle que soit la géométrie de ces pièces, on observe en outre des ondulations de température au niveau des zones de transfert thermique qui viennent encore aggraver les phénomènes de surchauffe et de sous chauffe précédemment décrits.

Le but de la présente invention est de remédier à ces inconvénients en proposant un moule de fabrication plus aisée et permettant d'atténuer ces hétérogénéités de température de moulage, ainsi qu'un procédé de fabrication d'un tel moule permettant de moduler facilement les performances magnétiques et/ou thermiques visées.

A cet effet, l'invention a pour premier objet un moule comprenant au moins une partie inférieure et une partie supérieure délimitant une cavité à l'intérieur de laquelle une matière à mouler devant être portée à une température Ttr supérieure à 20°C, est introduite puis mise en forme par contact avec lesdites partie inférieure et supérieure du moule qui sont chauffées par l'action d'un courant induit généré par au moins un inducteur électromagnétique, au moins une desdites partie inférieure et supérieure présentant une zone de transfert thermique avec ladite matière à mouler, ladite zone de transfert thermique comprenant au moins une sous-zone de transfert thermique constituée d'au moins un matériau ferromagnétique présentant un point de Curie Tc compris entre 20 et 800°C, qui est en contact avec un revêtement constitué d'un matériau non ferromagnétique à conductivité thermique supérieure à 30 W.m⁻¹K⁻¹, lui-même en contact avec ladite matière à mouler.

Dans le cadre de la présente invention, on entend par zone de transfert thermique, la ou les zones du moule qui sont parcourues par un courant induit généré par l'inducteur électromagnétique. Comme on l'a vu précédemment, l'épaisseur de cette zone dépend de la résistivité électrique moyenne du matériau du moule et de la fréquence f du courant d'excitation et est dans tous les cas au maximum égale à $\delta_{amagn}$.

On préfère que cette zone de transfert thermique soit monobloc c'est à dire qu'il s'agisse d'une zone massive d'un seul tenant, ne résultant pas d'un assemblage d'éléments et ne pouvant pas être démontée. Ce terme n'exclut cependant pas la présence d'un ou plusieurs revêtements faisant corps avec un substrat de base.

Dans un mode de réalisation préféré, ladite zone de transfert thermique comprend au moins deux sous-zones de transfert thermique présentant une perméabilité magnétique différente l'une de l'autre au voisinage de ladite température Ttr, l'une au moins desdites sous-zones étant constituée d'un matériau ferromagnétique présentant un point de Curie Tc compris entre 20 et 800°C, chacune desdites sous-zones étant en contact avec avec un revêtement constitué d'un matériau non ferromagnétique présentant une conductivité thermique supérieure à 30 W.m$^{-1}$K$^{-1}$, lui-même en contact avec ladite matière à mouler.

Dans une variante de ce mode de réalisation préféré, les sous-zones de transfert présentent des points de Curie identiques mais sont constituées de proportions de composés magnétiques différentes.

Dans une autre variante de ce mode de réalisation préféré du moule selon le second objet de l'invention, les sous-zones de transfert thermique présentent des points de Curie différents, pouvant être constituées de deux alliages fer-nickel de composition différente ou bien encore d'un alliage fer-nickel de composition identique mais de structure cristallographique différente.

Les moules selon l'invention peuvent en outre incorporer les caractéristiques suivantes, prises isolément ou en combinaison :

- la cavité présente au moins une zone d'angle, au moins une sous-zone de transfert thermique entourant cette zone,
- le revêtement en matériau non ferromagnétique est constitué d'aluminium, de cuivre, d'étain ou de leurs alliages,
- le point de Curie est compris entre 60 et 350°C,
- le matériau ferromagnétique est constitué d'un alliage fer-nickel, de préférence, comprenant au moins 25% en poids de nickel, de 0,001 à 10% en manganèse ainsi que des impuretés inévitables résultant de l'élaboration et peut contenir jusqu'à 15% en poids de chrome, jusqu'à 15% en poids de cobalt, jusqu'à 15% en poids de cuivre, jusqu'à 10% en poids d'au moins un élément choisi parmi le silicium, l'aluminium, le vanadium, le molybdène, le tungstène ou le niobium, et peut contenir en outre au moins un élément choisi parmi le soufre, le bore, le magnésium ou le calcium.

Un deuxième objet de l'invention est constitué par un procédé de fabrication d'un moule selon le premier objet de l'invention, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on dépose une couche d'un matériau non ferromagnétique présentant une conductivité thermique supérieure à 30 W.m$^{-1}$K$^{-1}$ sur tout ou partie de la portion de ladite zone de transfert thermique constituée dudit alliage ferromagnétique. De préférence, la couche de métal ou d'alliage métallique présentant une conductivité thermique supérieure à 30 W.m$^{-1}$K$^{-1}$ est constituée d'aluminium, de cuivre, d'étain ou de leurs alliages, en particulier d'alliages de cuivre et de nickel.

Un troisième objet de l'invention est constitué par un procédé de fabrication d'un moule selon le second objet de l'invention, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on dépose une couche d'un métal ou d'un alliage non-ferromagnétique sur tout ou partie de la portion de ladite zone de transfert thermique constituée dudit alliage ferromagnétique et on fait diffuser ladite couche de métal ou d'alliage par traitement thermique localisé, ledit métal ou alliage étant choisi de façon à provoquer une précipitation de phases amagnétiques par sa diffusion, formant ainsi une sous-zone de transfert thermique dont la proportion de composés magnétiques est différente de tout ou partie du reste de la zone de transfert thermique. De préférence, la zone de transfert thermique comprend initialement un alliage fer-nickel austénitique ou austéno-ferritique ou austéno-martensitique comprenant au moins 25% en poids de nickel de 0,001 à 10% en manganèse ainsi que des impuretés inévitables résultant de l'élaboration et pouvant contenir jusqu'à 15% en poids de chrome, jusqu'à 15% en poids de cobalt, jusqu'à 15% en poids de cuivre, jusqu'à 10% en poids d'au moins un élément choisi parmi le silicium, l'aluminium, le vanadium, le molybdène, le tungstène ou le niobium, et pouvant contenir en outre au moins un élément choisi parmi le soufre, le bore, le magnésium ou le calcium, et le métal non ferromagnétique est constitué d'aluminium.

Un quatrième objet de l'invention est constitué par un procédé de fabrication d'un moule selon le second objet de l'invention, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on procède à un traitement thermique localisé sur au moins une portion de ladite zone de transfert thermique constituée dudit alliage, de manière à former une sous-zone de transfert thermique dont la structure cristallographique et donc le point de Curie sont différents de tout ou partie du reste de la zone de transfert thermique. De préférence, la zone de transfert thermique comprend initialement un alliage fer-nickel austénitique ou austéno-ferritique ou austéno-martensitique comprenant au moins 25% en poids de nickel, de 0,001 à 10% en manganèse ainsi que des impuretés inévitables résultant de l'élaboration et pouvant contenir jusqu'à 15% en poids de chrome, jusqu'à 15% en poids de cobalt, jusqu'à 15% en poids de cuivre, jusqu'à 10% en poids d'au moins un élément choisi parmi le silicium, l'aluminium, le vanadium, le molybdène, le tungstène ou le niobium, et pouvant contenir en outre au moins un élément choisi parmi le soufre, le bore, le magnésium ou le calcium, et ledit traitement thermique localisé consiste en un refroidissement rapide de ladite portion de zone de transfert thermique, provoquant ainsi une transformation de tout ou partie de l'austénite en martensite.

Un cinquième objet de l'invention est constitué par un procédé de fabrication d'un moule selon le second objet de l'invention, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on dépose une couche d'un métal ou d'un alliage non ferromagnétique sur tout ou partie de la portion de ladite zone de transfert thermique constituée dudit alliage et on fait diffuser ladite couche de métal ou d'alliage non ferromagnétique par traitement thermique localisé, ledit métal ou alliage étant choisi de façon à modifier localement le point de Curie par sa diffusion formant ainsi une sous-zone de transfert thermique dont le point de Curie est différent de celui de tout ou partie du reste de la zone de transfert thermique. De préférence, la zone de transfert thermique comprend initialement un alliage fer-nickel comprenant au moins 25% en poids de nickel ainsi que des impuretés inévitables résultant de l'élaboration et pouvant contenir jusqu'à 10% en poids de chrome, jusqu'à 10% en poids de cobalt et jusqu'à 10% en poids de cuivre, et ledit métal déposé sur au moins une portion de la zone de transfert thermique est du cuivre.

Un sixième objet de l'invention est constitué par un dispositif de moulage par induction comprenant un moule selon l'invention et au moins un inducteur électromagnétique.

Un septième objet de l'invention est constitué par un procédé de fabrication d'un produit en matière plastique ou composite à l'aide d'un moule selon l'invention, dans lequel ladite matière plastique ou lesdites matières composites sont introduites à l'intérieur de la cavité dudit moule puis mis en forme par contact avec lesdites parties inférieure et supérieure du moule dont l'une au moins est portée à une température homogène à plus ou moins 8°C près, et de préférence à plus ou moins 5°C près, et comprise entre 60°C et 350°C par l'action d'un courant induit généré par ledit inducteur électromagnétique.

Dans le cadre de la présente invention, on désigne notamment par le terme plastique, les composés thermoplastiques, les composés thermodurcissables, les élastomères, les composés vulcanisables.

Par ailleurs, on entend par le terme composite toute association des matériaux plastiques cités ci-dessus avec un élément tel que du verre, du carbone, un oxyde, un métal ou un alliage métallique. Cet élément supplémentaire pouvant être incorporé sous la forme de fibres dispersées, ou sous la forme d'un réseau tissé ou non, ou bien encore sous la forme d'un ou plusieurs parements adhérant à la matière plastique pour former une structure sandwich ou bicouche, ou bien encore une structure cellulaire, tel qu'une structure en nid d'abeille, par exemple.

Comme on l'aura compris, la définition du moule selon l'invention est basée sur la modulation des caractéristiques d'usage de la zone de transfert thermique, permettant ainsi d'atténuer les hétérogénéités de température de surface de ce moule. Il a en effet été constaté de façon nouvelle et surprenante que l'obtention d'une température homogène en surface fonctionnelle du moule passait par une hétérogénéité des caractéristiques d'usage de la zone de transfert thermique.

En particulier, il a été constaté que les surchauffes avaient notamment lieu dans des zones de concentration des courants induits et les sous-chauffes dans des zones où les courants induits ne circulent pas. Ces phénomènes dépendent notamment de la géométrie des pièces à fabriquer, les zones anguleuses aigues allant jusqu'à l'angle droit étant le siège des concentrations de courant par effet de pointe, tandis que les zones anguleuses à angles obtus sont court-circuitées et ne voit pas de courant induit.

Dans le cadre de la présente invention, on entend par zone anguleuse ou zone d'angle une zone au niveau de laquelle la direction générale de la surface de la cavité de moulage varie sensiblement.

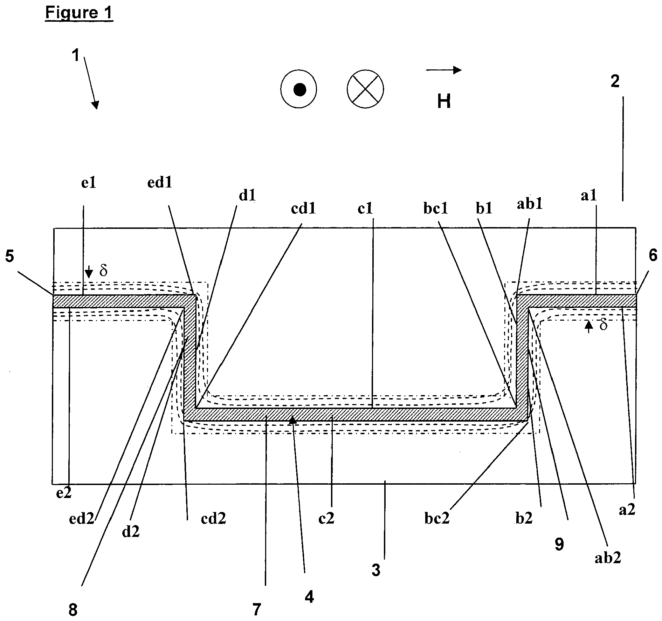

Ainsi, si on se réfère à la figure 1, on peut y voir une vue en coupe d'un exemple de moule 1 selon l'art antérieur, en deux parties supérieure 2 et inférieure 3 définissant dans leur entrefer une cavité entièrement remplie d'une matière plastique 4 en cours de moulage. Le moule 1 est fabriqué entièrement en un matériau magnétique présentant un point de Curie Tc proche de la température de transformation de la matière à mouler Ttr. L'objet fabriqué, ici une bassine, comporte deux rebords latéraux horizontaux 5 et 6 relié à un fond 7 par deux parois latérales verticales 8 et 9.

La figure comporte également l'indication de l'orientation du champ magnétique H auquel est soumis le moule sous l'effet d'un ou plusieurs inducteurs électromagnétiques (non représentés) qui sont parcourus par un courant électrique de fréquence f. Les inducteurs électromagnétiques sont de préférence intégrés dans la partie inférieure et dans la partie supérieure du corps du moule, comme on peut le voir en figure 1 de FR 2 867 939. La figure comporte aussi des lignes de circulation des courants induits générés par l'action du champ magnétique H et représentées par deux lignes en pointillés dans chacune des parties 2 et 3 du moule. Elle comporte enfin une représentation des zones de peau des parties 2 et 3 délimitées par un trait en pointillés alternant les traits longs et les traits courts.

Dans le cas de cette bassine 1, les zones dans lesquelles on a observé une sous chauffe significative sont situées au voisinage des zones ab2, bc1, cd1 et ed2 qui sont aussi les zones où l'on constate que les courants induits passent loin de la matière en cours de moulage, ces courants passant au plus court pour traverser la zone de peau. Ces zones peuvent être définies comme des zones dans lesquelles l'angle allant d'une première partie de la bassine à une seconde est obtus.

En ce qui concerne à présent les zones de surchauffe, elles ont été observées au voisinage des zones ab1, bc2, cd2 et ed1 qui sont aussi les zones où l'on constate que les courants induits se concentrent par effet de pointe. Ces zones peuvent être définies comme des zones dans lesquelles l'angle allant d'une première partie de la bassine à une seconde est aigu.

Or, lorsqu'on veut augmenter la puissance injectée dans une zone habituellement sous-chauffée, il a été établi que la zone locale considérée doit présenter une perméabilité magnétique supérieure à la valeur des zones environnantes, au voisinage de la température de travail concernée, c'est à dire dans un intervalle de + ou - 10°c autour de cette température de travail, ce qui revient à travailler sur des zones de transfert thermique à perméabilité inhomogènes.

A l'inverse, lorsqu'on veut diminuer la puissance injectée dans une zone habituellement surchauffée, il faut que la zone locale considérée présente une perméabilité magnétique inférieure à la valeur des zones environnantes, à la température de travail concernée, c'est à dire dans un intervalle de + ou - 10°c autour de cette température de travail.

Il est bien sur particulièrement avantageux de placer les zones de perméabilités modifiées au voisinage des zones anguleuses de la cavité de moulage, en fonction du type d'angle concerné. On pourra en particulier positionner des zones à perméabilité plus forte dans les zones de sous-chauffe et des zones à perméabilité réduite dans les zones de surchauffe, telles qu'elles ont été définies ci-dessus.

Une des variantes principales de l'invention consiste à mettre à disposition un moule présentant des sous-zones de transfert thermique dont les perméabilités magnétiques diffèrent car elles sont constituées de matériaux magnétiques dont les points de Curie sont différents.

Le réglage des points de Curie peut en particulier être obtenu par le réglage de la composition des matériaux concernés.

Il peut également être obtenu en conservant une composition chimique homogène mais en modifiant les structures cristallographiques des matériaux en fonction des zones concernées. En effet le point de Curie d'un matériau dépend grandement de la structure cristallographique et peut changer du tout au tout lorsque l'on passe, par exemple d'une structure austénitique à une structure martensitique. Un tel changement de structure est lui facile à obtenir puisqu'il peut suffire d'un traitement thermique localisé pour l'atteindre, qu'il s'agisse d'un réchauffement (comme une austénitisation par exemple) et/ou d'un refroidissement, plus ou moins rapides.

Si une zone de matériau devient amagnétique avant une autre zone de surface du moule parce que sa température dépasse son point de Curie, inférieur à celui d'une zone adjacente, la perméabilité de la zone diminue en passant de valeurs très élevées à la valeur un, et la puissance injectée décroit fortement. On obtient alors une autorégulation de la température autour du point de Curie de la zone à faible point de Curie, permettant ainsi de régler finement les réglages en température.

Une autre variante de l'invention consiste à mettre à disposition un moule présentant des sous-zones de transfert thermique dont les perméabilités magnétiques diffèrent bien qu'elles soient constituées de matériaux magnétiques ayant des points de Curie identiques. Cette diminution locale de la perméabilité peut en particulier être obtenue en déposant puis en faisant précipiter certains éléments non ferromagnétiques, qui n'influent pas sur le point de Curie, avec des éléments magnétiques de l'alliage magnétique initial, de telle sorte que des phases non ferromagnétiques soient formées et diminuent par conséquence la perméabilité de la sous-zone considérée.

Les alliages fer-nickel se prêtent bien à ces procédés de dépôt et de diffusion et permettent en particulier d'atteindre des températures de transformation comprises entre 60 et 350°C, pleinement compatibles avec les températures de transformation de la plupart des plastiques et composites, lorsqu'ils contiennent plus de 25% en poids de nickel.

Des ajouts de chrome, cobalt et cuivre pouvant aller jusqu'à 15% en poids permettent notamment d'ajuster plus finement les points de Curie :

- par exemple un alliage austénitique à 56% en poids de nickel (reste = Fer) en poids voit son point de Curie passer de 530 à 300°C lorsque le pourcentage de molybdène passe de 0 à 11% en poids.
- par exemple un alliage austénitique à 40% en poids de nickel (reste = Fer) en poids voit son point de Curie passer de 360 à 100°C lorsque le pourcentage en chrome passe de 0 à 15% en poids.
- par exemple un alliage austénitique contenant 30 à 32% en poids de nickel et 2 à 8% en poids de chrome (reste = Fer) en poids présente une distribution continue de points de Curie dans la plage de -20°C à 170°C, et pour chacune de ces compositions le point de Curie peut être accru de 10 à 15°C par pourcent en poids d'élément d'addition que sont le cuivre ou le cobalt

Un ajout de 0,01 à 10% en poids de manganèse permet d'améliorer l'aptitude à la mise en forme à chaud de l'alliage.

L'alliage préféré selon l'invention peut en outre contenir jusqu'à 10% en poids d'au moins un élément choisi parmi le silicium, l'aluminium, le vanadium, le molybdène, le tungstène ou le niobium.

Tous ces éléments (Cr, Cu, Co, Mo, Si, Al, Nb, V, W), présentent l'intérêt de permettre de régler le point de Curie à différentes valeurs, tout en ayant des actions différentes de ces éléments sur des propriétés importantes ici comme la résistivité électrique $\rho_{el}$, ou la conductivité thermique $\sigma_{th}$.

Ainsi dans les alliages austénitiques Fe-Ni-Mo, le molybdène, augmente significativement la résistivité électrique : par exemple l'alliage Fe-56%Ni voit sa résistivité électrique passer à l'ambiante de $30\mu\Omega$.cm à $100\mu\Omega$.cm lorsque le pourcentage de molybdène passe de 0 à 9% en poids.

Dans les alliages austénitiques Fe-Ni-Cr, le chrome augmente significativement la résistivité électrique : par exemple l'alliage Fe-45%Ni voit sa résistivité électrique passer à l'ambiante de $45\mu\Omega$.cm à $90\mu\Omega$.cm lorsque le pourcentage de chrome passe de 0 à 6% en poids.

Dans les alliages austénitiques Fe-Ni-Cu, le cuivre diminue significativement la résistivité électrique : par exemple l'alliage Fe-30%Ni voit sa résistivité électrique passer à l'ambiante de $88\mu W$.cm à $78\mu W$.cm lorsque le pourcentage de cuivre passe de 4 à 10% en poids.

De même Si, Al, Nb, V,et W abaissent plus ou moins sensiblement le point de Curie Tc et augmentent la résistivité électrique

Enfin, cet alliage peut comprendre en outre au moins un élément choisi parmi le soufre, le bore, le magnésium ou le calcium. On préfère en particulier limiter la teneur cumulée en soufre et bore à une fourchette de 2 à 60 ppm, tandis que la teneur cumulée en magnésium et calcium sera de préférence limitée à une fourchette de 10 à 500 ppm. Ces éléments permettent notamment d'améliorer l'usinabilité de la nuance.

Par ailleurs, quelle que soit la géométrie de ces pièces, des ondulations de température ont en outre été observées au niveau des zones de transfert thermique. Sans vouloir être lié par une théorie, il est supposé que ces ondulations pourraient venir de la constitution des inducteurs qui se présentent sous forme de spires et seraient à l'origine de courants induits «en miroir» par rapport à leur emplacement et à leur forme.

Il a été constaté que l'on pouvait atténuer considérablement ces ondulations en recouvrant tout ou partie de la zone de transfert thermique par un matériau non ferromagnétique conduisant particulièrement bien la chaleur. Un tel matériau permet apparemment de jouer le rôle de diffuseur des ondes de chaleur, ce qui atténue les différences de température dans des proportions importantes. Ce type de régulation prend en particulier son sens sur des zones non anguleuses telles que les zones c1 et c2 de la bassine de la figure 1.

D'une façon générale, l'épaisseur de tels revêtements sera inférieure à celle de la zone de transfert thermique et de préférence inférieure au dixième de l'épaisseur de peau.

Il va de soi que les différentes mesures proposées dans le cadre de l'invention pour homogénéiser la température de surface du moule pourront être combinées dans la mesure où elles sont compatibles.

Les moules de l'invention pourront être obtenus par simple usinage de blocs massifs de matériaux magnétiques ou bien par usinage de blocs en matériaux amagnétiques, voire non métalliques, suivi du dépôt d'une couche de matériaux magnétiques par tout procédé adapté, tel que le placage, le dépôt par plasma, par sputtering, ou bien encore par projection. Dans tous les cas, une fois que l'on a obtenu une surface aux dimensions géométriques et aux propriétés magnétiques adéquates, on peut mettre en oeuvre le procédé de fabrication de moule selon l'invention. Ce procédé permet en particulier d'obtenir simplement une zone de transfert thermique monobloc, sans l'ajout d'aucun insert.

A cet effet, on pourra utiliser toutes les variantes décrites précédemment, qui s'appliquent plus particulièrement à la fabrication d'un moule dont au moins une partie de la zone de transfert thermique comprend, voire est constituée d'une matrice fer-nickel que l'on vient modifier aux endroits identifiés comme devant être adaptés pour assurer une bonne homogénéité finale en température.

L'invention va maintenant être décrite plus en détail mais de façon non limitative et illustrée par des exemples.

## Exemples

On réalise une série de moules dans des matériaux différents, qui vont être décrits dans chaque exemple. Ces moules présentent tous une forme identique à celle du moule de la figure 1 pour la fabrication d'une bassine.

Dans une première série d'exemples, la matière plastique à mouler constituant le produit est un composite thermoplastique avec fibre de verre et matrice polypropylène qui présente un point de transformation à une température de 200°C.

Dans une deuxième série d'exemples, la matière plastique à mouler constituant le produit est un plastique qui présente un point de transformation à une température de 125°C.

Sauf mention contraire, les pourcentages des compositions d'alliages indiqués sont exprimés en poids et toutes les compositions selon l'invention contiennent 0,1% de manganèse et des impuretés inévitables usuelles résultant de l'élaboration.

## Contre-exemple 1

Afin de pouvoir comparer les performances de l'invention à celle de l'art antérieur, on a procédé à un premier essai de moulage à l'aide d'un moule comportant des pièces métalliques rapportées, appelées inserts.

On remplace localement dans les zones de surchauffe précédemment identifiées, la matière du moule par ces inserts constitués de matériaux non magnétiques tels qu'un acier inoxydable austénitique.

On place les inserts dans les zones de concentration des courants induits, ce qui permet d'atteindre localement une profondeur de pénétration de la puissance très augmentée. Cela veut dire que les courants induits ne se concentrent plus sur l'extrême surface du coude mais s'étalent sur la zone de virage environnante, dissipant ainsi moins d'énergie sur la surface même d'échange du coude.

Dans ce cas on arrive à limiter la différence de température entre le moule et le produit à une fourchette de l'ordre de 20-30°C ce qui peut être suffisant mais nécessite un coût de construction des moules plus élevé, ne permet pas un ajustement et un transfert thermique parfait insert/moule et ne permet pas de fabriquer certains produits à géométrie complexe telle les formes en entonnoir ou en cuvette très profonde.

**Contre-exemple 2**

On a ensuite procédé à un second essai selon l'art antérieur en fabriquant un moule dont la zone de transfert thermique est constituée d'un seul alliage ferromagnétique.

Les moules ont été usinés dans des alliages austénitiques FeNi ou FeNiCr connus pour pouvoir aisément ajuster le point de Curie par la composition. Il est en effet bien connu que si on choisit un point de Curie Tc proche de la température de palier désirée (ici pour la mise en forme des plastiques ou composite), on obtient un phénomène d'autorégulation de température autour de Tc (les pertes magnétiques et courants disparaissent en grande partie à l'approche du point de Curie) et en final un rééquilibrage des zones en sous- et surchauffe.

Avec cette solution utilisant un alliage FeNiCr ayant Tc=210°C, on obtient:

- inhomogénéité thermique autour des angles marqués du produit: $\Delta T_{angle}$ = 15°C
- inhomogénéités thermique au niveau du fond de la bassine $\Delta T_{fond}$ = 20°C.
- inhomogénéités thermiques reflets des spires d'inducteur $\Delta T_{spirinduc}$ =20°C.

Ainsi donc l'effet d'autorégulation de température autour du point de Curie est efficace principalement sur l'homogénéité de température des zones à angle aigu, la réduisant à 15°C au lieu de 20 à 30°C avec inserts et beaucoup plus sans insert. Les autres types d'inhomogénéités thermiques sont en revanche peu améliorés.

**Exemple 1**

On utilise un alliage FeNiCr austénitique dont la température de Curie Tc est au voisinage de 210°C - pouvant être par exemple Fe-35%Ni ou Fe-37%Ni-6%Cr ou Fe-50%Ni-11,5%Cr - comme précurseur à l'état massif homogène dans laquelle on vient usiner la forme 3D du produit plastique ou composite à mettre en forme par chauffage par induction.

Dans cet exemple, après l'usinage des surfaces de transfert thermique, on plaque une feuille d'aluminium de l'ordre de 50µm de façon à ce que cette feuille recouvre bien la surface usinée fonctionnelle du moule, c'est à dire les deux surfaces en regard des deux pièces de moule.

Ensuite, posant ces deux pièces de moule recouvertes, dans un four en gardant la feuille d'aluminium du côté de la face supérieure du moule, on applique un traitement thermique de fusion/plaquage de l'aluminium sur la surface en portant les pièces de moule à une température supérieure à 600°C durant au moins quelques minutes mais ne permettant qu'une diffusion négligeable de l'aluminium dans l'alliage FeNiCr. Le but de ce traitement thermique est en effet uniquement l'accrochage étroit de l'aluminium sur l'alliage FeNiCr (liaison métal-métal).

On procède ensuite à un essai de moulage à l'aide du moule obtenu. On obtient alors:

- inhomogénéité thermique autour des coudes marqués du produit: $\Delta T_{angle}$ = 12°C

- $\Delta T_{fond}$ 20°C .

- inhomogénéités thermiques reflets des spires d'inducteur $\Delta T_{spirinduc}$ = 8°C

Ainsi donc l'effet d'autorégulation de température autour du point de Curie est efficace principalement sur l'homogénéité de température des zones à angle aigu et se trouve renforcée par le revêtement mince conducteur d'aluminium, la réduisant à 12°C au lieu de 15°C sans aluminium et 20 à 30°C avec inserts et beaucoup plus sans insert.

De plus, la mince couche d'aluminium joue un rôle très intéressant de diffuseur thermique même à ces fréquences élevées et en des temps aussi court de transfert thermique (de l'ordre de la minute) puisque l'hétérogénéité thermique résultant de l'effet direct de localisation des spires de l'inducteur sur la surface fonctionnelle $\Delta T_{spirinduc}$ est ramenée à 8°C au lieu de 20°C sans la couche d'aluminium. La température du fond de la bassine reste aussi éloignée de l'objectif, ce qui dans certains cas de plastique ou de cahier des charges de produit peut être accepté.

**Exemple 2**

On reproduit l'exemple n°1 mais avec un autre alliage précurseur car on vise ici à obtenir dans une matière plastique mise en forme ci-dessus une température de 125°C lors de chauffe par induction.

Différents alliages FeNiCrCu ayant un point de Curie très proche de 125°C ont ici été successivement testés:

- Fe-32%Ni

- Fe-30,3%Ni-2%Cr

- Fe-36,5%Ni-9%Cr-0,2%Mn

- Fe-29%Ni-2%Cr-3,5%Co

- Fe-40%Ni-13%Cr-2%Co

- Fe-30%Ni-2%Cr-3%Cu

- Fe-28%Ni-2%Cr-5,5%Cu

Chaque alliage est approvisionné à l'état de bloc dans lequel on vient usiner la forme 3D de la matière plastique à mettre en forme par chauffage par induction.

Après l'usinage des surfaces fonctionnelle de transfert thermique, on plaque une feuille d'aluminium de 50 μm de façon à ce que cette feuille recouvre bien la surface usinée fonctionnelle du moule, c'est à dire les deux surfaces en regard des deux pièces de moule. Ensuite, posant ces deux pièces de moule recouvertes, dans un four en gardant la feuille d'aluminium du côté de la face supérieure du moule, on applique un traitement thermique de fusion/plaquage d'aluminium sur la surface fonctionnelle en portant les pièces de moule à une température supérieure à 600°C durant au moins quelques minutes mais ne permettant qu'une diffusion négligeable de l'aluminium dans l'alliage FeNiCr. Le but de ce traitement thermique est en effet uniquement l'accrochage étroit de l'aluminium sur l'alliage FeNiCr (liaison métal-métal).

On procède ensuite à un essai de moulage à l'aide du moule obtenu. On obtient alors:

- inhomogénéité thermique autour des coudes marqués du produit: $\Delta T_{angle}$ = 10°C

- $\Delta T_{fond}$ = 16°C.

- inhomogénéités thermiques reflets des spires d'inducteur $\Delta T_{spirinduc}$ = 6°C

On vérifie ainsi les mêmes avantages de performances (réduction d'hétérogénéités thermiques) que dans l'exemple 2 sur la même forme complexe de produit mais avec des températures de chauffage et un alliage précurseur différents.

## Exemple 3

On utilise ici un alliage Fe-30%Ni-2%Cr-3%Cu austénitique dont la température de Curie Tc est au voisinage de 125°C pour la mise en forme rapide après chauffage induction d'une matière plastique.

Cet alliage est approvisionné à l'état de bloc dans lequel on vient usiner la forme 3D du produit à mettre en forme. Après l'usinage des surfaces fonctionnelles de transfert thermique, une feuille d'aluminium de 50 μm est plaquée de façon à ce que cette feuille recouvre bien la surface usinée fonctionnelle du moule, c'est à dire les deux surfaces en regard des deux pièces de moule.

Ensuite, posant ces deux pièces de moule recouvertes, dans un four en gardant la feuille d'aluminium du côté de la face supérieure du moule, on applique un traitement thermique de fusion/plaquage de l'aluminium sur la surface fonctionnelle en portant les pièces de moule à une température supérieure à 600°C durant au moins quelques minutes mais ne permettant qu'une diffusion négligeable de l'aluminium dan l'alliage FeNiCrCu. Le but de ce premier traitement thermique est uniquement l'accrochage étroit de l'aluminium sur l'alliage (liaison métal-métal). A ce stade la surface de transfert thermique est conforme et similaire à celles des exemples 1 et 2 précédents.

Dans une nouvelle étape de traitement thermique, bien différenciée de la précédente, on chauffe certaines surfaces du moule par différents moyens connus (chalumeau, inducteur localisé, pièce métallique préchauffée et mise en contact, apport d'énergie par rayonnement ...) de façon à faire diffuser en sous surface l'aluminium préalablement plaqué, engendrant alors précipitation de phase secondaire non magnétiques, et baisse significative de perméabilité μr.

Les faces soumises à cet apport intense de chaleur surfacique sont nécessairement les faces a1, a2, b1, b2, d 1, d2, e1, e2 c'est à dire toutes les faces de la surface de transfert thermique sauf celles de fond de la bassine (c1 et c2). Pour l'aluminium déposé, l'apport de chaleur doit monter la température de surface à au moins 500°C, de préférence au moins 600°C de façon à faire diffuser l'aluminium dans la sous-surface sans qu'une surfusion trop élevée de l'aluminium dégrade l'homogénéité du dépôt.

On procède ensuite à un essai de moulage à l'aide du moule obtenu. On obtient alors:

- inhomogénéité thermique autour des coudes marqués du produit: $\Delta T_{angle}$ = 12°C

- $\Delta T_{fond}$ = 8 °C.

- inhomogénéités thermiques reflets des spires d'inducteur $\Delta T_{spirinduc}$ = 11°C

Ainsi donc l'effet d'autorégulation de température autour du point de Curie est efficace principalement sur l'homogénéité de température des zones à angle aigu et se trouve renforcée par le revêtement mince conducteur d'aluminium, la réduisant à 12°C au lieu de 15°C sans aluminium et 20 à 30°C avec inserts et beaucoup plus sans insert. De plus, la mince couche d'aluminium joue un rôle très intéressant de diffuseur thermique même à ces fréquence élevées et en des temps aussi court de transfert thermique (de l'ordre de la minute) puisque l'hétérogénéité thermique résultant de l'effet direct de localisation des spires de l'inducteur sur la surface fonctionnelle $\Delta T_{spirinduc}$ est ramenée à 11°C au lieu de 20°C sans la couche d'aluminium.

De plus dans ce cas de diffusion forcée d'aluminium en sous-surface de certaines faces du moule, la température du fond de cuvette s'est relevée sensiblement à 8°C de l'objectif, démontrant l'intérêt de contrôler les hétérogénéités de température par des hétérogénéités calibrées de propriétés en sous zone de transfert thermique.

**Exemple 4**

On utilise ici un alliage FeNiCrCu austénitique et ferromagnétique à température ambiante après transformations à chaud puis à froid puis recuit de recristallisation et refroidissement de 5 °C/h à 5000 °C/h jusqu'à l'ambiante, et ayant de 25 à 36%Ni. En effet dans ce domaine de composition, le passage dans l'azote liquide d'un tel alliage austénitique (ou éventuellement austéno-ferritique dans certains cas de composition) le transforme complètement en martensite dont le point de Curie est très supérieur aux températures de travail de mise en forme visées par l'invention (<350°C): En localisant cet effet de transformation à l'azote liquide dans les zones de sous chauffe, on relève la température de ces zones.

On utilise une surface de transfert réalisée à partir de l'alliage de l'exemple 3 avec un point de Curie au voisinage de 125°C sur l'alliage précurseur avec un des alliages suivant:

- Fe-32%Ni
- Fe-30,3%Ni-2%Cr
- Fe-29%Ni-2%Cr-3,5%Co
- Fe-30%Ni-2%Cr-3%Cu
- Fe-28%Ni-2%Cr-5,5%Cu

puis une feuille d'aluminium est plaquée par un 1er traitement thermique sur la surface, puis diffusée en sous surface par un deuxième traitement thermique sur les faces autres que le fond de cuvette. Enfin, les arêtes saillantes (ab2, bc1, cd1, ed2) de la surface de transfert souffrant de sous-chauffe chronique sont traitées localement à l'azote pour induire localement une structure martensitique et une forte hausse locale de Tc.

On procède ensuite à un essai de moulage à l'aide du moule obtenu. On obtient alors:

- inhomogénéité thermique autour des coudes marqués du produit: $\Delta T_{angle}$ = 7°C
- $\Delta T_{fond}$ = 9 °C.

- inhomogénéités thermiques reflets des spires d'inducteur $\Delta T_{spirinduc}$ = 10°C

On obtient ainsi tous les avantages déjà énoncés avec l'exemple 3 avec en plus une réduction significative de l'hétérogénéité de température entre zones à coude qui tombe alors à 7°C au lieu de 10-12°C sans transformation martensitique.

**Exemple 5**

On utilise ici un alliage FeNiCrCu austénitique ou austéno-ferritique à 25-34%Ni et <11%Cu, dont le point de Curie se situe au voisinage de 125°C - pouvant être par exemple Fe-28%Ni-5%Cu - comme précurseur à l'état massif homogène dans laquelle on vient usiner la forme 3D du produit (plastique ou composite) à mettre en forme par chauffage par induction.

Après l'usinage des surfaces de transfert thermique, on plaque une feuille d'aluminium de 50μm de façon à ce que cette feuille recouvre bien les faces de la surface usinée fonctionnelle du moule autres que les faces du fond de la bassine, donc les faces de type a, b, d, e, f, g sur les deux surfaces en regard des deux pièces de moule. De façon différente des exemples précédents, on recouvre les faces de type c (fond de cuvette) par une feuille mince de cuivre de 40 μm.

Puis les différents traitements thermiques sont ensuite successivement réalisés:

- fusion/plaquage de l'aluminium sur la surface de transfert thermique en portant les pièces de moule à une température supérieure à 600°C durant au moins quelques minutes mais ne permettant qu'une diffusion négligeable de l'aluminium dans l'alliage FeNiCrCu

- fusion/plaquage de cuivre sur la surface de transfert thermique en portant les pièces de moule à une température supérieure à 1000°C durant au moins quelques minutes mais ne permettant qu'une diffusion négligeable du cuivre dans l'alliage FeNiCrCu. Ce traitement sera fait préférablement en mettant tout le moule dans un four ce qui permettra alors de faire diffuser l'aluminium en sous surface pour précipiter des phases amagnétiques secondaires et régler la perméabilité en sous surface concernée.

- chauffage superficiel du cuivre localisé aux faces de type c, suffisamment longtemps et à haute température pour que le cuivre se mélange avec la matrice de l'alliage précurseur FeNiCrCu. Ainsi le point de Curie en surface de type c est augmenté.

On réalise pour finir une trempe localisée à l'azote liquide des arêtes saillantes de la cavité de moulage, tel que décrit dans l'exemple 4, afin de modifier la microstructure de l'alliage magnétique.

On procède ensuite à un essai de moulage à l'aide du moule obtenu. On obtient alors:

- inhomogénéité thermique autour des coudes marqués du produit: $\Delta T_{angle}$ = 6°C

- $\Delta T_{fond}$ = 8°C.

- inhomogénéités thermiques reflets des spires d'inducteur $\Delta T_{spirinduc}$ = 8°C

Par cette méthode on parvient donc aussi à réduire de façon très satisfaisante les différentes hétérogénéités thermiques.

Comme on l'aura compris, la présente invention propose plusieurs solutions permettant d'atténuer au maximum les hétérogénéités de température de surface de la zone de transfert thermique d'un moule, étant bien entendu que ces différentes solutions peuvent être combinées à volonté en fonction de la géométrie particulière du produit à obtenir et donc de la cavité de moulage correspondante.

La description qui vient d'en être faite se rapporte plus particulièrement au moulage de matière plastique et de composites mais ne s'y limite pas, un tel moule pouvant trouver des usages pour la mise en forme d'autres types de produits tels que des verres, des métaux ou des alliages métalliques par exemple. Dans le cas des produits métalliques, la mise en forme des matériaux pourra en particulier être effectuée par emboutissage à chaud.

**Revendications**

1. Moule comprenant au moins une partie inférieure et une partie supérieure délimitant une cavité à l'intérieur de laquelle une matière à mouler devant être portée à une température Ttr supérieure à 20°C, est, en utilisation, introduite puis mise en forme par contact avec lesdites partie inférieure et supérieure du moule qui sont chauffées par l'action d'un courant induit généré par au moins un inducteur électromagnétique, au moins une desdites partie inférieure et supérieure présentant une zone de transfert thermique avec ladite matière à mouler, ladite zone de transfert thermique comprenant au moins une sous-zone de transfert thermique constituée d'au moins un matériau ferromagnétique présentant un point de Curie Tc compris entre 20 et 800°C; **caractérisé en ce que** ladite zone de transfert thermique est en contact avec un revêtement constitué d'un matériau non ferromagnétique à conductivité thermique supérieure à 30 W.m$^{-1}$K$^{-1}$, lui-même en contact avec ladite matière à mouler.

2. Moule selon la revendication 1, dans lequel ladite zone de transfert thermique comprend au moins deux sous-zones de transfert thermique présentant une perméabilité magnétique différente l'une de l'autre au voisinage de ladite température Ttr, l'une au moins desdites sous-zones étant constituée d'un matériau ferromagnétique présentant un point de Curie Tc compris entre 20 et 800°C, chacune desdites sous-zones étant en contact avec un revêtement constitué d'un matériau non ferromagnétique présentant une conductivité thermique supérieure à 30 W.m$^{-1}$K$^{-1}$, lui-même en contact avec ladite matière à mouler.

3. Moule selon la revendication 1 ou 2, pour lequel ladite cavité présente au moins une zone d'angle, au moins une sous-zone de transfert thermique entourant ladite zone.

4. Moule selon l'une quelconque des revendications 1 à 3, pour lequel ledit revêtement en matériau non ferromagnétique est constitué d'aluminium, de cuivre, d'étain ou de leurs alliages.

5. Moule selon l'une quelconque des revendications 1 à 4, pour lequel ledit point de Curie est compris entre 60 et 350°C.

6. Moule selon l'une quelconque des revendications 1 à 5, pour lequel ledit matériau ferromagnétique est constitué d'un alliage fer-nickel.

7. Moule selon la revendication 6, pour lequel ledit matériau ferromagnétique comprend au moins 25% en poids de nickel, de 0,001 à 10% en manganèse ainsi que des impuretés inévitables résultant de l'élaboration et peut contenir jusqu'à 15% en poids de chrome, jusqu'à 15% en poids de cobalt, jusqu'à 15% en poids de cuivre, jusqu'à 10% en poids d'au moins un élément choisi parmi le silicium, l'aluminium, le vanadium, le molybdène, le tungstène ou le niobium, et peut contenir en outre au moins un élément choisi parmi le soufre, le bore, le magnésium ou le calcium.

8. Moule selon l'une quelconque des revendications 2 à 7, pour lequel lesdites sous-zones de transfert présentent des points de Curie identiques mais sont constituées de proportions de composés magnétiques différentes.

9. Moule selon l'une quelconque des revendications 2 à 7, pour lequel lesdites sous-zones de transfert thermique présentent des points de Curie différents.

10. Moule selon la revendication 9, pour lequel lesdites sous-zones de transfert thermique sont constituées de deux alliages fer-nickel de composition différente.

11. Moule selon la revendication 9, pour lequel lesdites sous-zones de transfert thermique sont constituées d'un alliage fer-nickel de composition identique mais de structure cristallographique différente.

**12.** Moule selon l'une quelconque des revendications 1 à 11, pour lequel ladite zone de transfert thermique est monobloc.

**13.** Procédé de fabrication d'un moule selon les revendications 1 à 12, dans lequel on alimente une partie supérieure et une partie inférieure de moule délimitant une cavité et dont l'une au moins desdites parties inférieure et supérieure présente une zone de transfert thermique comprenant un alliage métallique ferromagnétique présentant un point de Curie Tc compris entre 20 et 800°C, puis on dépose une couche d'un matériau non ferromagnétique présentant une conductivité thermique supérieure à 30 W.m⁻¹K⁻¹ sur tout ou partie de la portion de ladite zone de transfert thermique constituée dudit alliage ferromagnétique.

**14.** Procédé selon la revendication 13, dans lequel ladite couche de matériau non ferromagnétique présentant une conductivité thermique supérieure à 30 W.m⁻¹K⁻¹ est constituée d'aluminium, de cuivre, d'étain ou de leurs alliages, en particulier d'alliages de cuivre et de nickel.

**15.** Procédé de fabrication d'un moule selon l'une quelconque des revendications 2 à 8, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on dépose une couche d'un métal ou d'un alliage non-ferromagnétique sur tout ou partie de la portion de ladite zone de transfert thermique constituée dudit alliage ferromagnétique et on fait diffuser ladite couche de métal ou d'alliage par traitement thermique localisé, ledit métal ou alliage étant choisi de façon à provoquer une précipitation de phases amagnétiques par sa diffusion, formant ainsi une sous-zone de transfert thermique dont la proportion de composés magnétiques est différente de tout ou partie du reste de la zone de transfert thermique.

**16.** Procédé selon la revendication 15 dans lequel ladite zone de transfert thermique comprend initialement un alliage fer-nickel austénitique ou austéno-ferritique ou austéno-martensitique comprenant au moins 25% en poids de nickel de 0,001 à 10% en manganèse ainsi que des impuretés inévitables résultant de l'élaboration et pouvant contenir jusqu'à 15% en poids de chrome, jusqu'à 15% en poids de cobalt, jusqu'à 15% en poids de cuivre, jusqu'à 10% en poids d'au moins un élément choisi parmi le silicium, l'aluminium, le vanadium, le molybdène, le tungstène ou le niobium, et pouvant contenir en outre au moins un élément choisi parmi le soufre, le bore, le magnésium ou le calcium, et ledit métal non ferromagnétique est constitué d'aluminium.

**17.** Procédé de fabrication d'un moule selon l'une quelconque des revendications 2 à 7, 9 et 11, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on procède à un traitement thermique localisé sur au moins une portion de ladite zone de transfert thermique constituée dudit alliage, de manière à former une sous-zone de transfert thermique dont la structure cristallographique et donc le point de Curie sont différents de tout ou partie du reste de la zone de transfert thermique.

**18.** Procédé selon la revendication 17, dans lequel ladite zone de transfert thermique comprend initialement un alliage fer-nickel austénitique ou austéno-ferritique ou austéno-martensitique comprenant au moins 25% en poids de nickel, de 0,001 à 10% en manganèse ainsi que des impuretés inévitables résultant de l'élaboration et pouvant contenir jusqu'à 15% en poids de chrome, jusqu'à 15% en poids de cobalt, jusqu'à 15% en poids de cuivre, jusqu'à 10% en poids d'au moins un élément choisi parmi le silicium, l'aluminium, le vanadium, le molybdène, le tungstène ou le niobium, et pouvant contenir en outre au moins un élément choisi parmi le soufre, le bore, le magnésium ou le calcium, et ledit traitement thermique localisé consiste en un refroidissement rapide de ladite portion de zone de transfert thermique, provoquant ainsi une transformation de tout ou partie de l'austénite en martensite.

**19.** Procédé de fabrication d'un moule selon l'une quelconque des revendications 2 à 7 et 9 à 10, dans lequel on alimente une partie supérieure et une partie inférieure de moule délimitant une cavité et dont l'une au moins desdites parties inférieure et supérieure présente une zone de transfert thermique comprenant un alliage métallique ferromagnétique, puis on dépose une couche d'un métal ou d'un alliage non ferromagnétique sur tout ou partie de la portion de ladite zone de transfert thermique constituée dudit alliage et on fait diffuser ladite couche de métal ou d'alliage non ferromagnétique par traitement thermique localisé, ledit métal ou alliage étant choisi de façon à modifier localement le point de Curie par sa diffusion formant ainsi une sous-zone de transfert thermique dont le point de Curie est différent de celui de tout ou partie du reste de la zone de transfert thermique.

**20.** Procédé selon la revendication 19, dans lequel ladite zone de transfert thermique comprend initialement un alliage fer-nickel comprenant au moins 25% en poids de nickel ainsi que des impuretés inévitables résultant de l'élaboration et pouvant contenir jusqu'à 10% en poids de chrome, jusqu'à 10% en poids de cobalt et jusqu'à 10% en poids de cuivre, et ledit métal déposé sur au moins une portion de ladite zone de transfert thermique est du cuivre.

**21.** Dispositif de moulage par induction comprenant un moule selon l'une quelconque des revendications 1 à 12 ou d'un moule pouvant être obtenu par le procédé selon l'une quelconque des revendications 13 à 20, et au moins un inducteur électromagnétique.

**22.** Procédé de fabrication d'un produit en matière plastique ou composite à l'aide d'un moule selon l'une quelconque des revendications 1 à 12 ou d'un moule pouvant être obtenu par le procédé selon l'une quelconque des revendications 13 à 20 ou d'un dispositif de moulage selon la revendication 21, dans lequel ladite matière plastique ou lesdites matières composites sont introduites à l'intérieur de la cavité dudit moule puis mis en forme par contact avec lesdites parties inférieure et supérieure du moule dont l'une au moins est portée à une température homogène à plus ou moins 8°C près et comprise entre 60°C et 350°C par l'action d'un courant induit généré par ledit inducteur électromagnétique.

**23.** Procédé selon la revendication 22, pour lequel ladite température est homogène à plus ou moins 5°C près.


**Patentansprüche**

**1.** Gießform, umfassend mindestens einen Unter- und einen Oberteil, die einen Hohlraum definieren, in dem ein zu formendes Material, das auf eine 20 °C übersteigende Temperatur Ttr zu bringen ist, eingeführt und anschließend durch den Kontakt zum Unter- und Oberteil der Gießform, die durch die Einwirkung eines durch mindestens einen elektromagnetischen Induktor erzeugten induzierten Stroms erwärmt werden, geformt wird, wobei mindestens einer vom Unter- und Oberteil einen Wärmeübertragungsbereich mit dem zu formenden Material aufweist, wobei der Wärmeübertragungsbereich mindestens einen Wärmeübertragungs-Teilbereich umfasst, der aus mindestens einem ferromagnetischen Material mit einem Curie-Punkt Tc zwischen 20 und 800 °C besteht, **dadurch gekennzeichnet, dass** sich, wenn die Gießform benützt wird, der Wärmeübertragungsbereich in Kontakt mit einer Beschichtung befindet, die aus einem nicht ferromagnetischen Material mit einer 30 W.m$^{-1}$K$^{-1}$ übersteigenden Wärmeleitfähigkeit besteht, die sich selbst mit dem zu formenden Material in Kontakt steht.

**2.** Gießform nach Anspruch 1, wobei der Wärmeübertragungsbereich mindestens zwei Wärmeübertragungs-Teilbereiche umfasst, die im Bereich der Temperatur Ttr jeweils eine andere magnetische Permeabilität aufweisen, wobei mindestens einer der Teilbereiche aus einem ferromagnetischen Material mit einem Curie-Punkt Te zwischen 20 und 800 °C besteht, wobei jeder der Teilbereiche sich mit einer Beschichtung in Kontakt befindet, die aus einem nicht ferromagnetischen Material mit einer 30 W.m$^{-1}$K$^{-1}$ übersteigenden Wärmeleitfähigkeit besteht, die selbst mit dem zu formenden Material in Kontakt steht.

**3.** Gießform nach Anspruch 1 oder 2, wobei der Hohlraum mindestens einen gewinkelten Bereich aufweist, der von mindestens einem Wärmeübertragungs-Teilbereich umgeben ist.

**4.** Gießform nach einem der Ansprüche 1 - 3, wobei die aus nicht ferromagnetischem Material bestehende Beschichtung aus Aluminium, Kupfer, Zinn oder ihren Legierungen besteht.

**5.** Gießform nach einem der Ansprüche 1 - 4, wobei der Curie-Punkt zwischen 60 und 350 °C liegt.

**6.** Gießform nach einem der Ansprüche 1 - 5, wobei das ferromagnetische Material aus einer Eisen-Nickel-Legierung besteht.

**7.** Gießform nach Anspruch 6, wobei das ferromagnetische Material mindestens 25 Gew. % Nickel, 0,001 - 10 % Mangan sowie unvermeidliche Verunreinigungen infolge der Herstellung umfasst, und höchstens 15 Gew. % Chrom, höchstens 15 Gew. % Kobalt, höchstens 15 Gew. % Kupfer, höchstens 10 Gew. % mindestens ein aus der nachfolgenden Gruppe gewähltes Element: Silizium, Aluminium, Vanadium, Molybdän, Wolfram oder Niob umfassen kann, und ferner mindestens ein aus der nachfolgenden Gruppe gewähltes Element enthalten kann: Schwefel, Bor, Magnesium oder Kalzium.

**8.** Gießform nach einem der Ansprüche 2 - 7, wobei die Wärmeübertragungs-Teilbereiche identische Curie-Punkte aufweisen, aber aus unterschiedlichen Anteilen na magnetischen Zusammensetzungen bestehen.

**9.** Gießform nach einem der Ansprüche 2 - 7, wobei die Wärmeübertragungs-Teilbereiche unterschiedliche Curie-Punkte aufweisen.

**10.** Gießform nach Anspruch 9, wobei die Wärmeübertragungs-Teilbereiche aus zwei Eisen-Nickel-Legierungen mit unterschiedlichen Zusammensetzungen bestehen.

11. Gießform nach Anspruch 9, wobei die Wärmeübertragungs-Teilbereiche aus einer Eisen-Nickel-Legierung mit identischer Zusammensetzung aber unterschiedlichen kristallographischen Strukturen bestehen.

12. Gießform nach einem der Ansprüche 1 -11, wobei der Wärmeübertragungsbereich einteilig ist.

13. Verfahren zur Herstellung einer Gießform nach Anspruch 1 - 12, wobei ein Oberteil und ein Unterteil einer Gießform, die einen Hohlraum definieren, und von denen mindestens einer der beiden Teile einen Wärmeübertragungsbereich umfasst, der eine ferromagnetische Metalllegierung mit einem Curie-Punkt Tc zwischen 20 und 800 °C umfasst, einführt, und anschließend eine Schicht aus einem nicht ferromagnetischem Material mit einer 30 $W.m^{-1}K^{-1}$ übersteigenden Wärmeleitfähigkeit auf den ganzen aus der ferromagnetischen Legierung bestehenden Wärmeübertragungsbereich oder einen Teil davon ablagert.

14. Verfahren nach Anspruch 13, wobei die Schicht aus nicht ferromagnetischem Material mit einer 30 $W.m^{-1}K^{-1}$ übersteigenden Wärmeleitfähigkeit aus Aluminium, Kupfer, Zinn oder Legierungen davon, insbesondere Kupfer- und Nickellegierungen, besteht.

15. Verfahren zur Herstellung einer Gießform nach einem der Ansprüche 2 - 8, wobei ein Oberteil und ein Unterteil einer Gießform, die einen Hohlraum definieren, eingeführt wird, wobei mindestens einer der beiden Teile einen Wärmeübertragungsbereich aufweist, der eine ferromagnetische Metalllegierung umfasst, und anschließend eine Schicht aus einem nicht ferromagnetischen Metall oder Legierung auf den ganzen aus der ferromagnetischen Legierung bestehenden Wärmeübertragungsbereich oder einen Teil davon ablagert und die Metall- oder Legierungsschicht durch eine lokalisierte Wärmebehandlung verteilt wird, wobei das Metall oder die Legierung derart gewählt ist, dass sie infolge ihrer Verteilung eine Ausfällung der nicht magnetischen Phasen bewirkt, wodurch ein Wärmeübertragungs-Teilbereich gebildet wird, der magnetische Verbindungen ganz oder teilweise in einem anderen Anteil als der übrige Wärmeübertragungsbereich umfasst.

16. Gießform nach Anspruch 15, wobei der Wärmeübertragungsbereich zunächst eine austenitische oder austenitisch-ferritische Legierung umfasst, die mindestens 25 Gew. % Nickel und 0,001 - 10 % Mangan sowie unvermeidliche Verunreinigungen infolge der Herstellung umfasst, und höchstens 15 Gew. % Chrom, höchstens 15 Gew. % Kobalt, höchstens 15 Gew. % Kupfer, höchstens 10 Gew. % mindestens ein aus der nachfolgenden Gruppe gewähltes Element: Silizium, Aluminium, Vanadium, Molybdän, Wolfram oder Niob umfassen kann, und ferner mindestens ein aus der nachfolgenden Gruppe gewähltes Element enthalten kann: Schwefel, Bor, Magnesium oder Kalzium, und wobei das nicht ferromagnetische Metall aus Aluminium besteht.

17. Verfahren zur Herstellung einer Gießform nach einem der Ansprüche 2 - 7, 9 und 11, wobei ein Oberteil und ein Unterteil einer Gießform, die einen Hohlraum definieren, eingeführt werden, wobei mindestens einer der beiden Teile einen eine ferromagnetische Metalllegierung umfassenden Wärmeübertragungsbereich aufweist, und anschließend eine lokalisierte Wärmebehandlung an mindestens einem Teil des aus der Legierung bestehenden Wärmeübertragungsbereichs vorgenommen wird, um einen Wärmeübertragungs-Teilbereich zu bilden, dessen kristallographische Struktur und somit auch sein Curie-Punkt sich vom übrigen Wärmeübertragungsbereich oder einem Teil davon unterscheiden.

18. Gießform nach Anspruch 17, wobei der Wärmeübertragungsbereich zunächst eine austenitische oder austenitisch-ferritische Legierung umfasst, die mindestens 25 Gew. % Nickel und 0,001 - 10 % Mangan sowie unvermeidliche Verunreinigungen infolge der Herstellung umfasst, und höchstens 15 Gew. % Chrom, höchstens 15 Gew. % Cobalt, höchstens 15 Gew. % Kupfer, höchstens 10 Gew. % mindestens ein aus der nachfolgenden Gruppe gewähltes Element: Silizium, Aluminium, Vanadium, Molybdän, Wolfram oder Niob umfassen kann, und ferner mindestens ein aus der nachfolgenden Gruppe gewähltes Element enthalten kann: Schwefel, Bor, Magnesium oder Kalzium, und wobei die lokalisierte Wärmebehandlung in einer raschen Abkühlung des Teils des Wärmeübertragungsbereichs besteht, die die Umwandlung des Austenits oder eines Teils davon in Martensit bewirkt.

19. Verfahren zur Herstellung einer Gießform nach einem der Ansprüche 2 - 7 und 9 - 10, wobei ein Oberteil und ein Unterteil einer Gießform, die einen Hohlraum definieren, verpflichtet wird, wobei mindestens einer der beiden Teile einen Wärmeübertragungsbereich aufweist, der eine ferromagnetische Metalllegierung umfasst, und anschließend eine Schicht aus einem nicht ferromagnetischen Metall oder Legierung auf den ganzen aus der ferromagnetischen Legierung bestehenden Wärmeübertragungsbereich oder einen Teil davon ablagert und die Metall- oder Legierungsschicht durch eine lokalisierte Wärmebehandlung verstreut wird, wobei das Metall oder die Legierung derart gewählt ist, dass sie infolge ihrer Verteilung den Curie-Punkt lokal modifiziert, wodurch ein Wärmeübertragungs-Teilbereich gebildet wird, dessen Curie-Punkt ein anderer ist als der des übrigen Wärmeübertragungsbereichs oder eines Teils davon.

20. Verfahren nach Anspruch 19, wobei der Wärmeübertragungsbereich zunächst eine Eisen-Nickel-Legierung umfasst, die mindestens 25 Gew. % Nickel sowie unvermeidliche Verunreinigungen infolge der Herstellung umfasst, und höchstens 10 Gew. % Chrom, höchstens 10 Gew. % Kobalt und höchstens 10 Gew. % Kupfer umfassen kann, wobei das auf mindestens einen Teil des Wärmeübertragungsbereichs abgelagerte Metall Kupfer ist.

21. Spritzgussvorrichtung, umfassend eine Gießform nach einem der Ansprüche 1 - 12 oder eine im Verfahren nach einem der Ansprüche 13 - 20 herstellbare Gießform und mindestens einen elektromagnetischen Induktor.

22. Verfahren zur Herstellung eines Kunststoff- oder Verbundstoffproduktes mithilfe einer Gießform nach einem der Ansprüche 1 - 12, einer im Verfahren nach einem der Ansprüche 13 - 20 oder mithilfe einer Vorrichtung nach Anspruch 21 herstellbaren Gießform, wobei der Kunststoff oder die Verbundstoffe in den Hohlraum der Gießform eingeführt werden und anschließend durch den Kontakt mit dem Ober- und Unterteil der Gießform geformt werden, wobei mindestens einer der Teile auf eine in einem Bereich von plus oder minus etwa 8 °C homogene Temperatur im Bereich zwischen 60 und 350 °C mittels eines durch den elektromagnetischen Induktor erzeugten Induktionsstroms gebracht wird.

23. Verfahren nach Anspruch 22, wobei die Temperatur in einem Bereich von etwa 5 °C homogen ist.

**Claims**

1. A mold comprising at least one lower portion and one upper portion delimiting a cavity inside of which a material to be molded which has to be brought to a temperature Ttr of more than 20°C, is introduced and then shaped by contact with said lower and upper portions of the mold which are heated by the action of an induced current generated by at least one electromagnetic inductor, at least one of said lower and upper portions having a heat transfer area with said molding material, said heat transfer area comprising at least one heat transfer sub-area consisting of at least one ferromagnetic material having a Curie point Tc comprised between 20 and 800°C, characterizd in that said heat transfer area is, in use, in contact with a coating consisting of a non-ferromagnetic material with a heat conductivity of more than 30 W.m⁻¹K⁻¹, itself in contact with said molding material.

2. The mold according to claim 1, wherein said heat transfer area comprises at least two heat transfer sub-areas having magnetic permeability different from each other in the vicinity of said temperature Ttr, at least one of said sub-areas consisting of a ferromagnetic material having a Curie point Tc comprised between 20 and 800°C, each of said sub-areas being in contact with a coating consisting of a non-ferromagnetic material having a heat conductivity of more than 30 W.m⁻¹K⁻¹, itself in contact with said molding material.

3. The mold according to claim 1 or 2, for which said cavity has at least one angle area, at least one heat transfer sub-area surrounding said area.

4. The mold according to any of claims 1 to 3, for which said coating in non-ferromagnetic material consists of aluminium, copper, tin or alloys thereof.

5. The mold according to any of claims 1 to 4, for which said Curie point is comprised between 60 and 350°C.

6. The mold according to any of claims 1 to 5, for which said ferromagnetic material consists of an iron-nickel alloy.

7. The mold according to claim 6, for which said ferromagnetic material comprises at least 25% by weight of nickel, from 0.001 to 10% of manganese as well as inevitable impurities resulting from the elaboration and may contain up to 15% by weight of chromium, up to 15% by weight of cobalt, up to 15% by weight of copper, up to 10% by weight of at least one element selected from silicon, aluminium, vanadium, molybdenum, tungsten or niobium, and may further comprise at least one element selected from sulfur, boron, magnesium or calcium.

8. The mold according to any of claims 2 to 7, for which said heat transfer sub-areas have identical Curie points but consist of different proportions of magnetic compounds.

9. The mold according to any of claims 2 to 7, for which said heat transfer sub-areas have different Curie points.

10. The mold according to claim 9, for which said heat transfer sub-areas consist of two iron-nickel alloys of different composition.

11. The mold according to claim 9, for which said heat transfer sub-areas consist of an iron-nickel alloy of identical composition but of different crystallographic structure.

12. The mold according to any of claims 1 to 11, for which said heat transfer area is a one-piece area.

13. A method for manufacturing a mold according to claims 1 to 12, in which an upper portion and a lower portion of a mold is fed delimiting a cavity and for which at least one of said lower and upper portions has a heat transfer area comprising a ferromagnetic metal alloy having a Curie point Tc comprised between 20 and 800°C, and then a layer of a non-ferromagnetic material having a heat conductivity of more than 30 W.m$^{-1}$K$^{-1}$ is deposited on all or part of the portion of said heat transfer area consisting of said ferromagnetic alloy.

14. The method according to claim 13, wherein said non-ferromagnetic material layer having a heat conductivity of more than 30 W.m$^{-1}$K$^{-1}$ consists of aluminium, copper, tin or alloys thereof, in particular alloys of copper and nickel.

15. The method for manufacturing a mold according to any of claims 2 to 8, wherein an upper portion and a lower portion of a mold is fed delimiting a cavity and for which at least one of said lower and upper portions has a heat transfer area comprising a ferromagnetic metal alloy, and a layer of metal or of non-ferromagnetic alloy is deposited on all or part of the portion of said heat transfer area consisting of said ferromagnetic alloy and said metal or alloy layer is diffused by localized heat treatment, said metal or alloy being selected so as to cause precipitation of amagnetic phases by its diffusion, thereby forming a heat transfer sub-area for which the proportion of magnetic compounds is different from all or part of the remainder of the heat transfer area.

16. The method according to claim 15, wherein said heat transfer area initially comprises an austenitic or austeno-ferritic or austeno-martensitic iron-nickel alloy comprising at least 25% by weight of nickel, from 0.001 to 10% of manganese as well as inevitable impurities resulting from the elaboration and which may contain up to 15% by weight of chromium, up to 15% by weight of cobalt, up to 15% by weight of copper, up to 10% by weight of at least one element selected from silicon, aluminium, vanadium, molybdenum, tungsten or niobium, and which may further contain at least one element selected from sulfur, boron, magnesium or calcium, and said non-ferromagnetic metal consists of aluminium.

17. The method for manufacturing a mold according to any of claims 2 to 7, 9 and 11, in which an upper portion and a lower portion of a mold is fed delimiting a cavity and for which at least one of said upper and lower portions has a heat transfer area comprising a ferromagnetic metal alloy, and it is then proceeded with localized heat treatment on at least one portion of said heat transfer area consisting of said alloy, so as to form a heat transfer sub-area for which the crystallographic structure and therefore the Curie point are different from those of all or part of the remainder of the heat transfer area.

18. The method according to claim 17, wherein said heat transfer area initially comprises an austenitic or austeno-ferritic or austeno-martensitic iron-nickel alloy comprising at least 25% by weight of nickel, from 0.001 to 10% of manganese as well as inevitable impurities resulting from the elaboration and which may contain up to 15% by weight of chromium, up to 15% by weight of cobalt, up to 15% by weight of copper, up to 10% by weight of at least one element selected from silicon, aluminium, vanadium, molybdenum, tungsten or niobium, and which may further contain at least one element selected from sulfur, boron, magnesium or calcium, and said localized heat treatment consists of rapidly cooling said heat transfer area portion, thus causing transformation of all or part of the austenite into martensite.

19. A method for manufacturing a mold according to any of claims 2 to 7 and 9 to 10, wherein an upper portion and a lower portion of a mold is fed delimiting a cavity and for which at least one of said lower and upper portions has a heat transfer area comprising a ferromagnetic metal alloy, and a layer of a non-ferromagnetic metal or alloy is deposited on all or part of the portion of said heat transfer area consisting of said alloy, and said non-ferromagnetic metal or alloy layer is diffused by localized heat treatment, said metal or alloy being selected so as to locally modify the Curie point by its diffusion thereby forming a heat transfer sub-area for which the Curie point is different from that of all or part of the remainder of the heat transfer area.

20. The method according to claim 19, wherein said heat transfer area initially comprises an iron-nickel alloy comprising at least 25% by weight of nickel as well as inevitable impurities resulting from the elaboration and which may contain up to 10% by weight of chromium, up to 10% by weight of cobalt and up to 10% by weight of copper, and said metal deposited on at least one portion of said heat transfer area is copper.

21. An induction molding device comprising a mold according to any of claims 1 to 12 or of a mold which may be obtained by the method according to any of claims 13 to 20, and at least one electromagnetic inductor.

22. A method for manufacturing a plastic or composite material product by means of a mold according to any of claims 1 to 12 or by a mold which may be obtained by the method according to any of claims 13 to 20 or by a molding device according to claim 21, wherein said plastic material or said composite materials are introduced inside the cavity of said mold and then shaped by contact with said lower and upper portions of the mold, at least one of which is brought to a homogeneous temperature to within plus or minus 8°C and comprised between 60°C and 350°C by action of an induced current generated by said electromagnetic inductor.

23. The method according to claim 22, for which said temperature is homogeneous to within plus or minus 5°C.

**Figure 1**

**EP 2 540 137 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2867939